# EUROPEAN PATENT SPECIFICATION

(11) **EP 0 487 079 B1**
(45) Date of publication and mention of the grant of the patent: **12.07.1995**
(21) Application number: 91119864.6
(22) Date of filing: 21.11.1991
(51) Int. Cl.: C08L 83/08

(54) **Organopolysiloxane composition for the formation of a cured release film**
Organopolysiloxanzusammensetzung zur Herstellung einer gehärteten Trennfolie
Composition d'organopolysiloxane pour la fabrication d'un film détachable durci

(30) Priority: 21.11.1990 JP 316806/90
(43) Date of publication of application: 27.05.1992
(73) Proprietor: Dow Corning Toray Silicone Company, Limited, Tokyo 103 (JP)
(72) Inventor: Sasaki, Shosaku, Chiba Prefecture (JP); Hayashi, Masaushi, Chiba Prefecture (JP); Hamada, Yuji, Chiba Prefecture (JP)
(74) Representative: Spott, Gottfried, Dr.

(56) References cited:
- WO-A-81/00573
- FR-A- 2 343 459
- US-A- 4 121 000
- DATABASE WPIL Derwent Publications Ltd., London, GB; AN 86-201663 ; & JP-A-840 255 958

## Description

The present invention relates to an organopolysiloxane composition which cures to form a release film, and, more specifically, the present invention relates to an organopolysiloxane composition which cures to form a film which exhibits stable release properties with respect to tacky materials such as pressure-sensitive adhesives and the like.

It has long been known that products capable of releasing tacky substances (for example, pressure-sensitive adhesives) can be prepared by the formation of a cured release film on the surface of any of the various types of substrates, for example, paper, synthetic-resin films, synthetic-fiber fabrics, etc. An organopolysiloxane composition is typically used to form such cured release films. For example, Japanese Patent Publication Number 63- 48901 [48,901/88] discloses an organopolysiloxane composition of vinyl-containing organopolysiloxane, an SiH-containing organohydrogenpolysiloxane, a perfluoroalkyl-containing compound, and a platinum-type compound. Also Japanese Patent Application Laid Open [Kokai or Unexamined] Number 63-320 [320/88] discloses an organopolysiloxane composition of organohydrogenpolysiloxane, platinum-type compound, and organopolysiloxane compound that contains both fluoroalkyl and vinyl. The cured films produced by these organopolysiloxane compositions exhibit excellent release properties with respect to the usual tacky organic resin systems. However, they manifest a poor releaseability with respect to tacky organopolysiloxane-based silicone materials and are therefore not fully satisfactory for some applications.

The present inventors carried out research directed at solving the above-described problem, and as a result they discovered that an organopolysiloxane composition which contains a particular type of organic resin can be cured to give a film that exhibits excellent release properties with respect to silicone tack agents. The present invention was developed based on this discovery.

The object of the present invention is the introduction of an organopolysiloxane composition which cures to give a film that exhibits excellent release properties with respect to various types of tacky materials and in particular with respect to tacky silicone-based materials. It is also an object of the present invention to provide an organopolysiloxane composition containing a trifluorochloroethylene resin which retains good curability and residual adhesion and has superior releasability.

The present invention relates to a curable composition comprising: (A) 100 weight parts of an organopolysiloxane having in each molecule at least 1 fluorine-containing organic group and at least 2 alkenyl groups, (B) 0.3 to 40 weight parts of an organohydrogenpolysiloxane which contains at least 2 silicon-bonded hydrogen atoms in each molecule, (C) 0.1 to 20 weight parts of trifluorochloroethylene resin, (D) a catalytic quantity of a platinum-type catalyst, and (E) an arbitrary quantity of organic solvent. All weight parts are based on the total weight parts of Component (A).

To explain the preceeding in greater detail, the organopolysiloxane (A) employed by the present invention is the principal or main component of the composition according to the present invention, and it must contain at least 1 fluorine-containing organic group and at least 2 alkenyl groups in each molecule.

The fluorine-containing organic group under consideration is exemplified by groups with the following general formula:

CₙF₂ₙ₊₁-R-

wherein n is a number with a value of 1 to 20 and R is an alkylene group as exemplified by methylene, ethylene, propylene, and butylene; by groups with the following general formula:

CₙF₂ₙ₊₁-R-O-R-

wherein n and R are defined as above; and by groups with the following general formula: 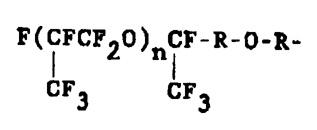
wherein n and R are defined as above.

The alkenyl group under consideration is exemplified by the following general formula:

CH₂=CH-(CH₂)ₐ

wherein a = 0 to 10.

The molecular structure of this organopolysiloxane is not specifically restricted as long as the molecular chain contains the organic groups specified above. The molecular structure may be linear or branched chain or may even be partially crosslinked.

The degree of polymerization is not specifically restricted, but viscosities of 100 to 1 million centistokes at 25 degrees Centigrade facilitate formation of the cured release film are preferred.

The other silicon-bonded organic groups are exemplified by substituted and unsubstituted monovalent hydrocarbon groups such as alkyl groups, e. g., methyl, ethyl, propyl, and butyl; aryl groups such as phenyl, tolyl, and xylyl; and substituted alkyl groups such as 2-phenylethyl and 2- phenylpropyl. Methyl preferably comprises at least 70 mole% of these groups from the standpoint of the release properties. Moreover, this organopolysiloxane may contain small quantities of the hydroxyl groups and/or alkoxy groups.

This component is concretely exemplified as follows: dimethylvinylsiloxy-terminated methyl(3,3,3-trifluoropropyl)siloxane-dimethylsiloxane-methylvinylsiloxane copolymers, dimethylvinylsiloxy-terminated methyl(perfluorobutylethyl)siloxane-dimethylsiloxane-methylvinylsiloxane copolymers, dimethylvinylsiloxy-terminated methyl(perfluorohexylethyl)siloxane-dimethylsiloxane-methylvinylsiloxane copolymers, trimethylsiloxy-terminated methyl(perfluorobutylethyl)siloxane-dimethylsiloxane-methylvinylsiloxane copolymers, trimethylsiloxy-terminated methyl(perfluorohexylethyl)siloxane-dimethylsiloxane-methylvinylsiloxane copolymers, dimethylvinylsiloxy-terminated methyl(perfluorobutylethyl)siloxane- dimethylsiloxane copolymers, silanol-terminated methyl(perfluorobutylethyl)siloxane-dimethylsiloxane-methylvinylsiloxane copolymers, and dimethylhexenylsiloxy-terminated methyl(perfluorobutylethyl)siloxane-dimethylsiloxane-methylhexenylsiloxane copolymers.

The organohydrogenpolysiloxane (B) employed by the present invention is a crosslinker for component (A), and this component must contain at least 2 silicon-bonded hydrogen atoms in each molecule in order to function as a crosslinker. The organohydrogenpolysiloxane under consideration is exemplified as follows: trimethylsiloxy-terminated dimethylsiloxane- methylhydrogensiloxane copolymers, dimethylhydrogensiloxy- terminated methyl(perfluorobutylethyl)siloxane-methylhydrogensiloxane copolymers, trimethylsiloxy-terminated methyl(perfluorobutylethyl)siloxane-dimethylsiloxane-methylhydrogensiloxane copolymers, trimethylsiloxy-terminated methyl(perfluorohexylethyl)siloxane-methylhydrogensiloxane copolymers, and copolymers composed of methyl(perfluorobutylethyl)siloxane units, dimethylhydrogensiloxane units, and SiO2 units.

This component is added at 0.3 to 40 weight parts per 100 weight parts component (A). The rate of cured film formation is slow at less than 0.3 weight parts, while the cured film exhibits a reduced releaseability when 40 weight parts is exceeded.

The trifluorochloroethylene resin (C) employed by the present invention is the distinguishing or characterizing component of the present invention. This component is indispensable for imparting a release function to the cured film afforded by the composition according to the present invention.

This trifluorochloroethylene resin is a fluorine- and chlorine-containing compound whose main skeleton has the following general formula: 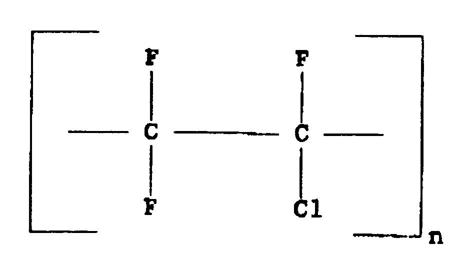
wherein n is an integer.

Such trifluorochloroethylene resins typically have a structure in which both terminals are stabilized with fluorine or chlorine atoms.

The trifluorochloroethylene resins range from oils at low degrees of polymerization (DP) to solids at high degrees of polymerization. However, compounds with a pour point in the range of 0 to 80 degrees Centigrade and low-DP compounds with an average molecular weight in the range of 900 to 2,000 are preferred for the present invention.

The trifluorochloroethylene resin is added within the range of 0.1 to 20 weight parts and preferably within the range of 1 to 10 weight parts per 100 weight parts component (A).

The platinum-type catalyst (D) employed by the present invention is a catalyst which brings about curing through the crosslinking of component (A) by component (B). It is concretely exemplified by microparticulate platinum adsorbed on a carbon powder carrier, chloroplatinic acid, alcohol-modified chloroplatinic acid, chloroplatinic acid/olefin complexes, chloroplatinic acid/vinylsiloxane coordination compounds, platinum black, palladium catalysts, and rhodium catalysts.

The organic solvent (E) employed by the present invention is indispensable for increasing the storage stability of the present invention's composition and for improving the coatability with respect to various substrates. This component may be any organic solvent which homogeneously dissolves the composition according to the present invention, and examples in this regard are aromatic hydrocarbons such as trifluorotoluene and hexafluoroxylene; aliphatic hydrocarbons such as heptane, hexane, pentane, and isooctane; halogenated hydrocarbons such as trichloroethylene and perchloroethylene; and methyl ethyl ketone.

Although the composition according to the present invention basically is comprised of the aforementioned components (A) through (E), it may optionally contain a small quantity of a component which inhibits the catalytic activity of the platinum-type catalyst comprising component (D) for the purpose of increasing the composition's room temperature storage stability. This component is exemplified by alkynyl alcohols such as 3-methyl-1-butyne-3-ol, 3,5 -dimethyl-1-hexyne-3-ol, 3-methyl-1-pentyne-3-ol, and phenylbutynol; and by 3-methyl-3-pentene-1-yne, 3,5-dimethyl-1-hexyne-3-ene, tetra(methylvinylsiloxane) cyclic, and benzotriazole.

The composition according to the present invention is readily prepared simply by mixing the aforementioned components (A) through (E) to homogeneity. An advantageous mixing method consists of homogeneously dissolving components (A) and (C) into component (E) and then mixing in components (B) and (D).

In order to form a cured film from the composition according to the present invention as described hereinbefore, it is applied to the surface of a particular substrate, such as paper, synthetic-resin film, or synthetic-fiber fabric, and then heated at 120 to 150 degrees Centigrade for 20 to 30 seconds. This serves to develop a cured film which adheres to the particular substrate and which exhibits a very stable release performance with respect to tacky substances such as, inter alia, pressure-sensitive adhesives.

The present invention will be explained in greater detail below through illustrative examples, in which "parts" equals "weight parts" and the viscosity is the value taken at 25 degrees Centigrade. The various measurement parameters in the examples were determined in accordance with the following methods.

The curability of the compositions of the present invention were evaluated in the following manner. An organopolysiloxane composition was coated in a specified quantity on the surface of a film or sheet substrate. This was then heated in a hot-air circulation oven at a specified temperature, and the time required for the formation of a completely cured film was then measured.

The peeling resistance of the compositions of the present invention were measured by applying an organopolysiloxane coating composition in a specified quantity on the surface of the film or sheet substrate. This was then heated in a hot-air circulation oven at a specified temperature for a specified time in order to form the cured film. A silicone resin tack agent (SD4580 from Toray Dow Corning Silicone Company, Limited, tack strength with respect to stainless steel sheet = 1,400 g/inch) was applied to the surface of this cured film and heated at 100 degrees Centigrade for 3 minutes. The surface thus treated was then overlaid with a polyethylene resin backing film (Lumilar S-10 from Toray Kabushiki Kaisha) followed by aging at 25 degrees Centigrade under a load of 20 g/cm² for a specified period of time to afford a measurement specimen. A 2.5 cm-wide test specimen was cut from the measurement specimen, and the backing film was pulled off at an angle of 180° and a peel rate of 0.3 m/minute using a tensile tester. The force required for peeling was measured in grams.

Residual adhesion was measured in the following manner. After the preceding peeling resistance measurement, the test specimen was pressed onto a stainless steel sheet, and the force (g) required to peel off the test specimen at an angle of 180° and a peel rate of 0.3 m/minute was measured. This force is reported as a percentage of the force required to peel off the untreated standard tape.

### Example 1

100 Parts dimethylvinylsiloxy-terminated methyl(perfluorobutylethyl)siloxane-dimethylsiloxane-methylvinylsiloxane copolymer (viscosity = 650 poise, methyl(perfluorobutylethyl)siloxane unit = 30 mole%, methylvinylsiloxane unit = 0.5 mole%), 3 parts trimethylsiloxy-terminated methyl(perfluorobutylethyl)siloxane-methylhydrogensiloxane copolymer (viscosity = 20 centipoise), 7.5 parts waxy trifluorochloroethylene resin (Daifuron R #100 from Daikin Kogyo Kabushiki Kaisha, pour point = 45 to 65 degrees Centigrade), and 1 part tetra(methylvinylsiloxane) cyclic were dissolved in 888.5 parts trichloroethane. The preparation of a release film-forming organopolysiloxane composition was then completed by the addition of 500 ppm of platinum metal which was a chloroplatinic acid-divinyltetramethylsiloxane complex. This composition was coated at 0.2 g/m² on the surface of polyethylene resin film, and the curability was then measured at 120 degrees Centigrade and at 140 degrees Centigrade. The peeling resistance and residual adhesion were measured for the cured film prepared by heating at 150 degrees Centigrade for 30 seconds. These measurement results are reported in Tables I and II. For comparison, an organopolysiloxane composition was prepared as above, but in this case omitting the trifluorochloroethylene resin. The curability, peeling resistance, and residual adhesion were measured on this organopolysiloxane composition as above, and these measurement results are also reported in Tables I and II.

**TABLE I**

| | CURABILITY IN SECONDS | |
|---|---|---|
| | 120 DEGREES CENTIGRADE | 140 DEGREES CENTIGRADE |
| PRESENT INVENTION | 30 | 20 |
| COMPARISON EXAMPLE | 30 | 20 |

**TABLE II**

| | CURING TEMPERATURE 30 SECONDS AT (DEGREES CENTIGRADE) | PEELING RESISTANCE (g/2.5 cm) | | RESIDUAL ADHESION(%) |
|---|---|---|---|---|
| | | AFTER 1 DAY | AFTER 10 DAYS | |
| PRESENT INVENTION | 150 | 200 | 200 | 98 |
| COMPARISON EXAMPLE | 150 | 480 | 480 | 97 |

### Example 2

100 Parts dimethylvinylsiloxy-terminated methyl(perfluorobutylethyl)siloxane-dimethylsiloxane-methylvinylsiloxane copolymer (viscosity = 650 poise, methyl(perfluorobutylethyl)siloxane unit = 30 mole%, methylvinylsiloxane unit = 0.5 mole%), 3.5 parts trimethylsiloxy-terminated methyl(perfluorobutylethyl)siloxane-methylhydrogensiloxane copolymer (viscosity = 20 centipoise), 5 parts waxy trifluorochloroethylene resin (Daifuron R #100 from Daikin Kogyo Kabushiki Kaisha, pour point = 45 to 65 degrees Centigrade), and 0.7 parts tetra(methylvinylsiloxane) cyclic were dissolved in 888.5 parts hexane. The preparation of a release film-forming organopolysiloxane composition was then completed by the addition of 500 ppm of platinum metal which was a chloroplatinic acid-divinyltetramethylsiloxane complex. This composition was coated at 0.2 g/m² on the surface of polyethylene resin film and was then heated at 150 degrees Centigrade for 30 seconds. The peeling resistance and residual adhesion were measured on the cured film thus obtained, and these measurement results are reported in Table III.

**TABLE III**

| | PEELING RESISTANCE (g/2.5 cm) | | RESIDUAL ADHESION (%) |
|---|---|---|---|
| | AFTER 1 DAY | AFTER 10 DAYS | |
| PRESENT INVENTION | 240 | 240 | 98 |

The release film-forming organopolysiloxane composition according to the present invention which is comprised of components (A) through (E), after curing, characteristically exhibits an excellent releaseability with respect to various types of tacky and pressure-sensitive materials and in particular exhibits an excellent releaseability with respect to silicone-based tack agents.

## Claims

1. A curable composition comprising:
(A) 100 weight parts of an organopolysiloxane having in each molecule at least 1 fluorine-containing organic group and at least 2 alkenyl groups;
(B) 0.3 to 40 weight parts of an organohydrogenpolysiloxane which contains at least 2 silicon- bonded hydrogen atoms in each molecule;
(C) 0.1 to 20 weight parts of trifluorochloroethylene resin;
(D) a catalytic quantity of a platinum-type catalyst; and
(E) an arbitrary quantity of an organic solvent; all weight parts being based on the total weight parts of component (A).

2. A curable composition as claimed in Claim 1, wherein the curable composition further comprises an inhibiting component sufficient to retard the catalytic activity of Component (D).

## Patentansprüche

1. Härtbare Zusammensetzung, umfassend:
(A) 100 Gew.-Teile eines Organopolysiloxans mit mindestens einer fluorhaltigen organischen Gruppe und mindestens zwei Alkenylgruppen in jedem Molekül;
(B) 0,3 bis 40 Gew.-Teile eines Organohydrogenpolysiloxans, das mindestens 2 siliciumgebundene Wasserstoffatome in jedem Molekül enthält;
(C) 0,1 bis 20 Gew.-Teile eines Trifluorchlorethylenharzes;
(D) eine katalytische Menge eines platinartigen Katalysators und
(E) eine willkürliche Menge eines organischen Lösungsmittels,
wobei alle Gewichtsteile sich auf die Gesamtgewichtsteile der Komponente (A) beziehen.

2. Härtbare Zusammensetzung nach Anspruch 1, worin die härtbare Zusammensetzung weiterhin eine hemmende Komponente umfaßt, die ausreicht, um die katalytische Aktivität von Komponente (D) zu verzögern.

## Revendications

1. Composition durcissable comprenant :
(A) 100 parties en poids d'un organopolysiloxane ayant dans chaque molécule au moins 1 groupe organique contenant du fluor et au moins 2 groupes alcényles ;
(B) 0,3 à 40 parties en poids d'un organohydrogénopolysiloxane qui contient au moins 2 atomes d'hydrogène liés au silicium dans chaque molécule ;
(C) 0,1 à 20 parties en poids de résine de trifluorochloroéthylène ;
(D) une quantité catalytique d'un catalyseur de type platine ; et
(E) une quantité arbitraire d'un solvant organique ; toutes les parties en poids étant sur la base des parties en poids totales du constituant (A).

2. Composition durcissable selon la revendication 1, dans laquelle la composition durcissable comprend en outre un constituant inhibiteur suffisant pour retarder l'activité catalytique du constituant (D).
